# EUROPÄISCHE PATENTSCHRIFT

(11) **EP 1 168 507 B1**
(45) Veröffentlichungstag und Bekanntmachung des Hinweises auf die Patenterteilung: **12.05.2004**
(21) Anmeldenummer: 01113362.6
(22) Anmeldetag: 01.06.2001
(51) Int. Cl.: H01R 9/26

(54) **Installationsverteiler**
Installation distributer
Distributeur pour installations

(30) Priorität: 21.06.2000 DE 10030610
(43) Veröffentlichungstag der Anmeldung: 02.01.2002
(73) Patentinhaber: ABB PATENT GmbH, 68526 Ladenburg (DE)
(72) Erfinder: Puhr-Westerheide, Jörg, Dr., 69231 Rauenberg-Malschenberg (DE); Schmitt, Volker, 69245 Bammental (DE); Eppe, Klaus-Peter, 69429 Waldbrunn (DE); Binder, Erwin, 69239 Neckarsteinach (DE)
(74) Vertreter: Miller, Toivo

(56) Entgegenhaltungen:
- FR-A- 2 582 451
- FR-A- 2 787 238
- GB-A- 1 560 168

## Beschreibung

Die Erfindung betrifft einen Installationsverteiler gemäß dem Oberbegriff des Anspruches 1.

Solche Installationsverteiler enthalten in einem Gehäuse Tragschienen, auf denen Installationsgeräte, insbesondere Leitungsschutzschalter, Fehlerstromschutzschalter und dgl. aufgeschnappt sind. Die Stromzufuhr in den Installationsverteiler erfolgt über ein Zugangskabel, das mit Stromsammelschienen verbunden ist, die in der Verteilung den Zugangsstrom zu den Installationsgeräten verteilen. Dem Eingang sind so genannte Einspeisemodule zugeordnet, die in ihrer Form den Installationsgeräten gleichen und zwei Klemmen besitzen, von denen die eine mit den Zugangsleitern des Zugangskabels und die andere mit den Sammelschienen verbunden ist. Beiden Klemmen sind innerhalb des Installationsgerätes mittels eines Verbindungsleiters miteinander verbunden.

Die Einspeisemodule benötigen Platz; da sie außer der Einspeisefunktion keine weiteren Funktionen zu erfüllen haben, ist dieser Platz ungenutzt.

Aus der FR 2 582 451 A1 ist ein Installationsverteiler bekannt geworden, bei dem auf einer Tragschiene mehrere Installationsgeräte aufgeschnappt sind, die Eingangs- und Ausgangsklemmen aufweisen. Für die Eingangsklemmen ist ein Zugangsanschluss vorgesehen; die Leitungsverbindung zu den übrigen Installationsgeräten erfolgt mittels einer Stromschiene. An den Abgangsklemmen schließen Verbraucher an.

Aufgabe der Erfindung ist es, einen Installationsverteiler der eingangs genannten Art zu schaffen, bei dem für die Ausgestaltung wenigstens der Einspeisemodule als steckbare Einspeisemodule der vorhandene Platz besser ausgenutzt ist.

Diese Aufgabe wird erfindungsgemäß gelöst durch die Merkmale des Anspruches 1.

Die Erfindung ist also dadurch gekennzeichnet, dass die Zugangsklemme eine Steckerfahne aufweist, die in ein Buchsenelement einer Stromschiene elektrisch - leitend einfügbar ist, dass an einem Schenkel die Steckerfahne angeformt ist und dass am anderen Schenkel ein Anschlusselement zu den Funktionselementen angeschlossen ist.

Die Einspeisemodule besitzen somit je eine Anschlussklemme an einer Schmalseitenwand, im folgenden als Zugangsklemme bezeichnet, mittels denen die Zugangsleiter mit den Stromschienen verbunden werden, und Funktionselemente, z. B. Leitungsschutzschalter, wobei an der der anderen Schmalseitenwand angeordneten Anschlussklemme ein Abgangsleiter anschließbar ist, der mit einem Verbraucher oder dgl. verbindbar ist.

Damit dienen die Einspeisemodule nicht nur zur Verbindung der Zugangsleiter mit den Sammelschienen, sondern üben auch eine Funktion aus, beispielsweise die Funktion eines Leitungsschutzschalters oder eines Überspannungsableiters, je nach dem, mit welchen Funktionseinheiten das einzelne Einspeisemodul ausgerüstet ist. Damit wird der innerhalb des Installationsverteilers zur Verfügung stehende Platz besser ausgenutzt.

An der Zugangsklemme ist eine Steckerfahne angebracht, so dass an der Zusatzklemme sowohl der Zugangsleiter als auch eine Stromsammelschiene angeschlossen werden können; der Zugangsleiter wird festgeklemmt und die Steckerfahne in ein Buchsenelement an der Stromsammelschiene beim Montieren des Einspeisemoduls auf der Tragschiene eingefügt.

Wenn als Anschlussklemme eine solche verwendet wird, bei der ein Klemmkörper vorgesehen ist, der den Klemmraum in zwei Aufnahmeräume bzw. Anschlussräume unterteilt, dann kann an dem Klemmkörper die Steckerfahne angebracht sein. Bei einer bekannten Anschlussklemme ist der Klemmkörper U-förmig; an einem Schenkel der U-Form schließt die Steckerfahne an, wogegen am anderen Schenkel im Falle eines Leitungsschutzschalters sowohl eine Lichtbogenleitschiene als auch ein Litzenleiter befestigt sein können, welch letzterer mit dem beweglichen Kontakthebel des Leitungsschutzschalters verbunden ist.

Anhand der Zeichnung, in der einige Ausführungsbeispiele der Erfindung dargestellt sind, sollen die Erfindung, weitere vorteilhafte Ausgestaltungen und Verbesserungen sowie weitere Vorteile näher erläutert und beschrieben werden. ters verbunden ist.

Anhand der Zeichnung, in der einige Ausführungsbeispiele der Erfindung dargestellt sind, sollen die Erfindung, weitere vorteilhafte Ausgestaltungen und Verbesserungen sowie weitere Vorteile näher erläutert und beschrieben werden.

Es zeigen:
- Fig. 1: eine Einsicht in einen Installationsverteiler gemäß der Erfindung,
- Fig. 2: eine Einsicht in einem Installationsgerät mit einem Überspannungsableiter,
- Fig. 3: eine Einsicht in ein Installationsgerät mit einem Leitungsschutzschalter,
- Fig. 4: eine Zugangsklemme in perspektivischer Darstellung und
- Fig. 5: einen Klemmkörper für die Zugangsklemme gemäß Fig. 4.

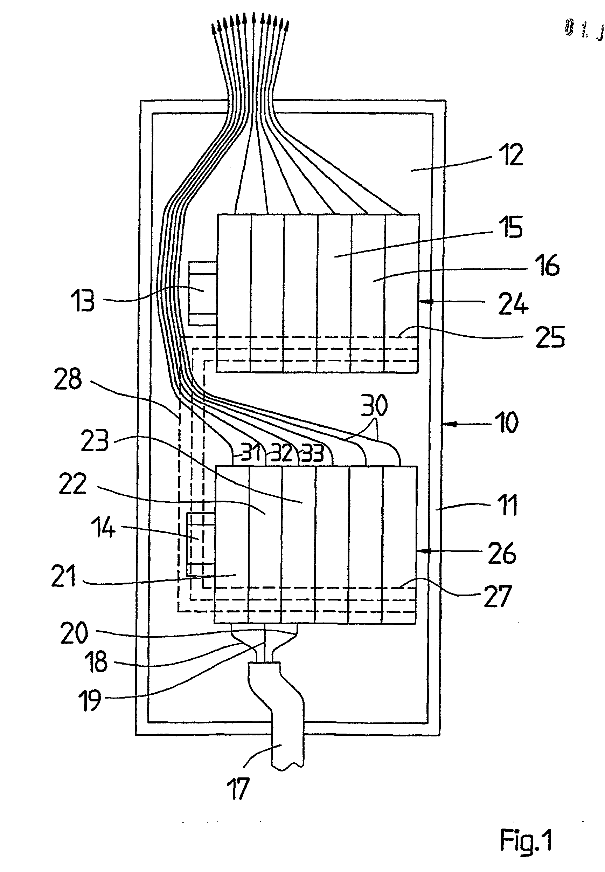

Die Fig. 1 zeigt einen Installationsverteiler 10 mit einem Gehäuse 11, das mittels einer nicht näher gezeigten Tür verschließbar ist. Am Boden 12 des Gehäuses 11 sind zwei Hutprofiltragschienen 13 und 14 befestigt, auf denen Installationsschaltgeräte 15,16... aufgeschnappt sind. Selbstverständlich können auch mehr als zwei Hutprofiltragschienen vorgesehen sein. In das Gehäuse ist ein Zugangskabel 17 eingeführt, das Zugangsleiter 18,19 und 20 aufweist, die an Einspeisemodulen 21, 22 und 23 angeschlossen sind. Der auf der Hutprofiltragschiene 13 aufgeschnappten oberen Reihe 24 der Installationsgeräte 15,16 ist eine erste Sammelschienenanordnung 25 und der auf der Tragschiene 14 aufgeschnappten unteren Reihe 26 von Installationsgeräten ist eine zweite Sammelschienenanordnung 27 zugeordnet, die über Verbindungsleiter 28 miteinander verbunden sind; die Sammelschienenanordnungen 25 und 27 und die Verbindungsleiter 28 sind strichliert dargestellt.

An den Abgangsklemmen der Installationsgeräte 15,16 sind Leiter 30 angeschlossen, die zu Verbrauchern (nicht dargestellt) führen. Auch an den Einspeisemodulen 21 bis 23 sind Verbindungsleiter 31,32 und 33 angeschlossen, die ebenfalls zu Verbrauchern führen.

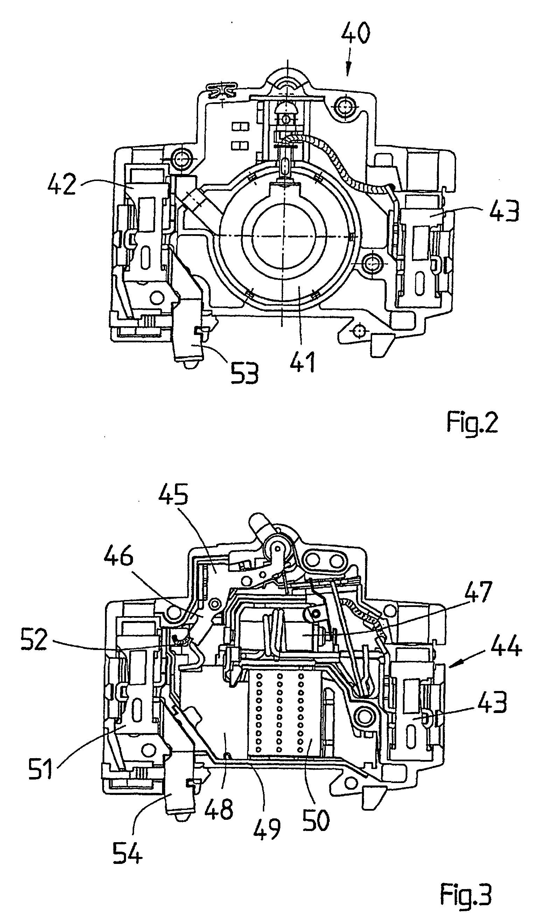

Als Einspeisemodule können Installationsgeräte verwendet werden, wie sie in den Figuren 2 und 3 dargestellt sind.

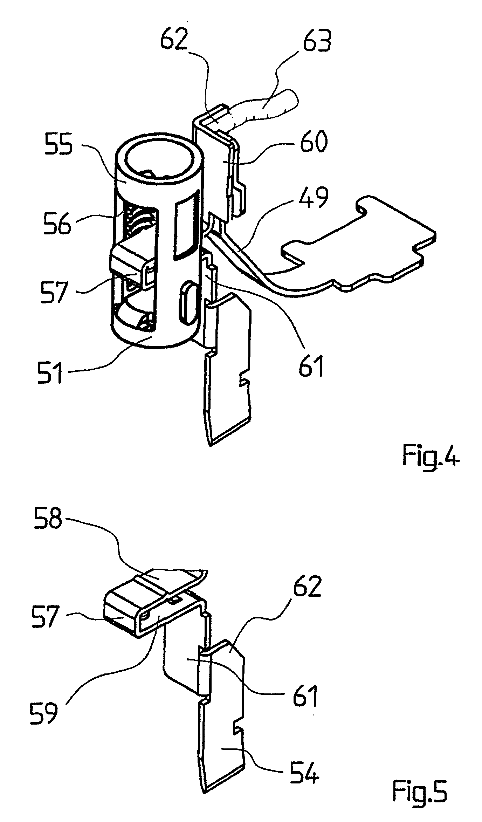

Die Fig. 2 zeigt einen Einblick in einem Installationsgerät 40 mit einem Überspannungsableiter 41. Er besitzt eine Zugangsklemme 42, die ähnlich der in Fig. 4 dargestellten Klemme ist. Insoweit soll auf die Fig. 4 und 5 verwiesen werden. Das Installationsgerät 40 besitzt weiterhin eine Abgangsklemme 43, an der beispielsweise Leiter 31, 32 oder 33 anschließbar sind.

Die Fig. 3 zeigt ein Einspeisemodul 44, das als Leitungsschutzschalter ausgebildet ist. Man erkennt ein Schaltschloß 45 mit einem beweglichen Kontakthebel 46, ein Magnetsystem 47 sowie eine Lichtbogenlöschkammer 48 mit Lichtbogenleitschiene 49 und Löschblechen 50. Die Zugangsklemme 51 hat Ähnlichkeit mit der Zugangsklemme 42, wobei an der Zugangsklemme 42 der Überspannungsableiter 41 anschließt, wogegen an der Zugangsklemme 51 die Lichtbogenleitschiene 49 und der Litzenleiter 52 angeschlossen sind, wie weiter unten näher dargestellt ist. An der Zugangsklemme 42 bzw. 51 sind Anschlußfahnen oder Steckerfahnen 53 und 54 eingebracht, was anhand der Figuren 4 und 5 dargestellt werden soll.

Die Zugangsklemme gemäß Fig. 4 ist die Zugangsklemme 51 des Einspeisemoduls gemäß Fig. 3. Sie besitzt einen zylindrischen Klemmenkörper 55, der an sich gegenüberliegenden Mantellinien in axialer Richtung verlaufende Schlitze 56 aufweist, wobei lediglich ein Schlitz sichtbar ist. Die Schlitze 56 sind durchgriffen von einem Klemmkörper, der eine U- Form mit zwei Schenkeln 58 und 59 bildet, die senkrecht zur Mittelachse des Klemmenkörpers 55 verlaufen. Beide Schenkel 58 und 59 sind an ihren aus dem Klemmenkörper 55 herausragenden Enden mit je einer Abwinkelung 60 und 61 versehen, die in entgegengesetzte Richtungen vorspringen. An der Abwinkelung 60 ist ein senkrecht dazu vorspringender Fortsatz 62 angeformt, an dem eine Litzenleitung 63, die der Litzenleitung 52 entspricht, befestigt ist. Weiterhin ist an der Abwinkelung 60 die Lichtbogenleitschiene 49 angeschlossen. An der anderen Abwinkelung 61 ist die Stekkerfahne 54 angeformt. Dazu ist an der Abwinkelung 61 eine senkrecht zur Abwinkelung 61 vorspringende Lasche 62 angeformt, die parallel zur Mittelachse des Klemmenkörpers 55 verläuft und in einer Ebene liegt, die parallel zu den Anschlußklemmen 51,43 ausgerichtet ist.

Die Figuren 4 und 5 zeigen eine Ausführungsform einer Anschlußklemme bzw. eine Zugangsklemme, bei der der Klemmenkörper zylinderförmig ist. Natürlich besteht auch die Möglichkeit, den Klemmenkörper anstatt zylinderförmig auch als ringförmig gebogenes Band in Form eines Klemmenrahmens auszubilden ; in diesen Klemmenrahmen kann in gleicher Weise der Klemmkörper 57 mit den Abwinkelungen 60 und 61 eingefügt werden. Auf die Zylinderform kommt es für die Erfindung nicht an.

Die Anschlußfahne oder Steckerfahne 54 ist mit der Sammelschienenanordnung 27 zu verbinden, indem sie in ein Buchsenelement beim Montieren des Einspeisemoduls einfügbar ist.

Im Gegensatz zu den bekannten Einspeisemodulen dienen die erfindungsgemäßen Einspeisemodule 21 bis 23 auch bestimmten Funktionen, z. B. einer Funktion als Überspannungsableiter oder einer Funktion als Leitungsschutzschalter. Damit wird der Platz innerhalb einer Installationsverteilung besser ausgenutzt.

## Patentansprüche

1. Installationsverteiler (10) mit einem Gehäuse (11), wenigstens einer Tragschiene (13, 14), auf der Installationsgeräte (15, 16; 21, 22, 23) festgerastet sind, mit einem Zugangskabel (17) bzw. Zugangsleitern und mit Abgangsleitungen (30 bis 33) zu Verbrauchern, mit Stromschienen (25, 27) zur ggf. phasenweisen Verbindung des Zugangskabels (17) mit den Installationsgeräten (15, 16; 21, 22, 23), und mit Einspeisemodulen (21, 22, 23), die die Zugangsleiter (18, 19, 20) des Zugangskabels (17) mit den Stromschienen (25, 27) verbinden, wobei die Einspeisemodule (21, 22, 23) je eine als Zugangsklemme dienende, an einer Schmalseitenwand vorgesehene Anschlussklemme (42, 51), mittels denen die Zugangsleiter (18 bis 20) mit den Stromschienen (27) verbindbar sind, und Funktionselemente, z. B. einen Überspannungsableiter oder ein Schaltgerät, aufweisen, wobei an der als Abgangsklemme dienenden Anschlussklemme der anderen Schmalseitenwand Abgangsleiter (31 bis 33) anschließbar sind, die zu Verbrauchern oder dgl. führen, und wobei die Einspeisemodule (21, 22, 23) eine Zugangsklemme (51) aufweisen, deren Klemmraum mittels eines U-förmigen Klemmkörpers (57) in zwei Räumen aufgeteilt ist, **dadurch gekennzeichnet, dass** die Zugangsklemme (42, 51) eine Steckerfahne (53, 54) aufweist, die in ein Buchsenelement einer Stromschiene elektrisch - leitend einfügbar ist, dass an einem Schenkel (59) die Steckerfahne (54) angeformt ist und dass am anderen Schenkel (58) ein Anschlusselement zu den Funktionselementen angeschlossen ist.

2. Installationsverteiler nach Anspruch 1, **dadurch gekennzeichnet, dass** bei Leitungsschutzschalterfunktionen der eine Schenkel (59) mit der senkrecht dazu verlaufenden Steckerfahne (54) versehen ist, und am anderen Schenkel (58) ein Litzenleiter (63) zu dem beweglichen Kontakthebel (46) und ggf. die Lichtbogenleitschiene (49) anschließen.

## Claims

1. Service distribution board (10) having a housing (11), at least one mounting rail (13, 14), to which service devices (15, 16; 21, 22, 23) are latched firmly, having an incoming cable (17) or incoming conductors and having output lines (30 to 33) to loads, having conductor bars (25, 27) for connecting the incoming cable (17), if necessary according to phase, to the service devices (15, 16; 21, 22, 23), and having feed modules (21, 22, 23), which connect the incoming conductors (18, 19, 20) of the incoming cable (17) to the conductor bars (25, 27), it being possible to connect each of the feed modules (21, 22, 23) to a connection terminal (42, 51), which acts as an incoming terminal, is provided on a narrow side wall, and by means of which the incoming conductors (18 to 20) can be connected to the conductor bars (27), and functional elements, for example a surge arrestor or a switching device, it being possible for output conductors (31 to 33), which lead to loads or the like, to be connected to the connection terminal, acting as the output terminal, of the other narrow side wall, and the feed modules (21, 22, 23) having an incoming terminal (51), whose clamping area is divided into two areas by means of a U-shaped clamping part (57), **characterized in that** the incoming terminal (42, 51) has a plug lug (53, 54), which can be electrically conductively inserted into a socket element of a conductor bar, **in that** the plug lug (54) is integrally formed on a limb (59), and **in that** a connection element to the functional elements is connected to the other limb (58).

2. Service distribution board according to Claim 1, **characterized in that**, for circuit-breaker functions, one limb (59) is provided with the plug lug (54) which extends perpendicular thereto, and a braided conductor (63) to the movable contact lever (47) and, if necessary, the arc guide rail (49) is connected to the other limb (58).

## Revendications

1. Distributeur d'installation (10) comportant un boîtier (11), au moins un rail. de support (13, 14) sur lequel des appareils d'installation (15, 16; 21, 22, 23) sont encliquetés, un câble d'entrée (17) ou des conducteurs d'entrée, des lignes de sortie (30 à 33) menant à des utilisateurs, des barres conductrices (25, 27) pour connecter éventuellement par phases le câble d'entrée (17) aux appareils d'installation (15, 16 ; 21, 22, 23) et des modules d'alimentation (21, 22, 23) qui relient les conducteurs d'entrée (18, 19, 20) du câble d'entrée (17) aux barres conductrices (25, 27), les modules d'alimentation (21, 22, 23) comportant chacun une borne de connexion (42, 51) qui est prévue sur un petit côté, sert de borne d'entrée et à l'aide de laquelle les conducteurs d'entrée (18 à 20) peuvent être connectés aux barres conductrices (27), ainsi que des éléments fonctionnels, par exemple un éclateur ou un interrupteur, des conducteurs de sortie (31 à 33) qui mènent à des utilisateurs ou similaires pouvant être connectés à la borne de connexion servant de borne de sortie sur l'autre petit côté et les modules d'alimentation (21, 22, 23) comportant une borne d'entrée (51), dont la chambre de serrage est séparée en deux chambres par un corps de serrage (57) en forme de U, **caractérisé par le fait que** la borne d'entrée (42, 51) présente une patte d'enfichage (53, 54) qui peut être introduite dans un élément formant douille de la barre conductrice pour assurer la connexion électrique, **par le fait que** la patte enfichable (54) est aménagée sur une branche (59) et qu'à l'autre branche (58) est connecté un élément de connexion menant aux éléments fonctionnels.

2. Distributeur d'installation selon la revendication 1, **caractérisé par le fait que** dans le cas de fonctions de disjoncteur de protection de ligne, l'une (59) des branches est pourvue de la patte enfichable (54) qui s'étend perpendiculairement à celle-ci tandis qu'à l'autre branche (58) est connectée une tresse conductrice (63) menant au levier de contact mobile (46) et le cas échéant la barre de captage d'arc (49).
